# EUROPÄISCHE PATENTSCHRIFT

(11) **EP 2 884 417 B1**
(45) Veröffentlichungstag und Bekanntmachung des Hinweises auf die Patenterteilung: **04.09.2019**
(21) Anmeldenummer: 13196499.1
(22) Anmeldetag: 10.12.2013
(51) Int. Cl.: G06F 21/55, G06F 21/57, G06F 21/86

(54) **Verfahren zur Abwehr von Cold-Boot Angriffen auf einen Computer in einem Selbstbedienungs-Terminal**
Method for defence against cold boot attacks on a computer in a self-service terminal
Procédé de protection contre les démarrages à froid sur un ordinateur dans un terminal en libre service

(43) Veröffentlichungstag der Anmeldung: 17.06.2015
(73) Patentinhaber: Wincor Nixdorf International GmbH, 33106 Paderborn (DE)
(72) Erfinder: Krummel, Volker, 33098 Paderborn (DE)

(56) Entgegenhaltungen:
- DE-A1-102011 014 665
- US-A1- 2008 222 430
- US-A1- 2012 079 593
- US-B1- 7 343 496
- ALEX HALDERMAN J ET AL: "Lest We Remember: Cold Boot Attacks on Encryption Keys", PROCEEDINGS OF THE USENIX SECURITY SYMPOSIUM,, Bd. 17th Usenix Security Symposium, 1. August 2008 (2008-08-01), Seiten 45-60, XP007910951,
- Patrick Mcgregor ET AL: "Braving the Cold: New Methods for Preventing Cold Boot Attacks on Encryption Keys", Black Hat USA 2008 Briefings, 7. August 2008 (2008-08-07), XP055106983, Gefunden im Internet: URL:http://www.crazylazy.info/cons/bh08/at tach/BH_US_08_McGregor_Cold_Boot_Attacks.p df [gefunden am 2014-03-11]

## Beschreibung

Die Erfindung betrifft ein Verfahren zur Abwehr von Cold-Boot-Angriffen auf einen Computer in einem Selbstbedienungs-Terminal, Außerdem betrifft die Erfindung ein Selbstbedienungs-Terminal, insbesondere einen Geldautomaten, mit einem Computer, der zur Durchführung des Verfahrens eingerichtet ist.

Selbstbedienungs-Terminals, insbesondere Geldautomaten, sind häufig Manipulationsversuchen und anderen kriminellen Akten ausgesetzt, die u.a, das Ziel haben, den Betrieb des Selbstbedienungs-Terminals zu manipulieren und/oder sensitive Daten, wie Konto- und Kundendaten, zu beschaffen. Dabei steht der in Selbstbedienungs-Terminals integrierte Computer im Fokus, welcher häufig durch einen Personal-Computer mit spezieller Anwendungs-Software realisiert wird. Ein solches Selbstbedienungs-Terminal wird z.B. in der DE 10 2009 018 320 A1 beschrieben, wobei der dort eingesetzte Personal-Computer auch als Datenverarbeitungseinheit oder Rechner bezeichnet wird.

Im Bereich der Personal-Computer, kurz auch PC genannt, sind zahlreiche Methoden bekannt, mit denen sich Kriminelle unerlaubten Zugriff auf den PC verschaffen. In diesem Zusammenhang sind sogenannte Cold-Boot-Angriffe bzw. Kaltstart-Attacken zu nennen. Die Grundlage eines Cold-Boot-Angriffs ist, dass nach einem Neustart des Rechners oder einem Ausschalten des Rechners der Speicherinhalt des Hauptspeichers für eine bestimmte Zeitspanne im Speicher verbleibt, obwohl z.B. keine externe Spannung mehr anliegt. Ein Angreifer kann in dieser Zeitspanne durch Einsatz einer besonderen Software den Speicherinhalt komplett auslesen und damit Kenntnis über sensitive Daten, wie z.B. kryptographische Schlüssel oder Transaktionsdaten, erlangen. Die Zeitspanne hängt unmittelbar von der Umgebungstemperatur ab. Durch ein drastisches Absenken der Temperatur, z.B. durch Besprühen des Speichers mit flüssigem Sauerstoff, kann der Angreifer die zur Verfügung stehende Zeitspanne in den Minutenbereich hinein verlängern.

Bis vor einiger Zeit war man davon ausgegangen, dass derartige Angriffe, wegen der immer noch relativ kurzen Zeitspanne, unter realen Bedingungen praktisch nicht möglich sind, In dem Artikel "Lest We Remember: Cold Boot Attacks on Encryption Keys" von J. Alex Halderman et al., erschienen in "Proc. 2008 USENIX Security Symposium" werden jedoch solche Angriffe und deren Durchführbarkeit dokumentiert. Dabei wird auch beschrieben, dass Angriffe besonders wahrscheinlich sind, wenn von externen Speichermedien gebootet wird.

In der Internet-Enzyklopädie "Wikipedia" (s. http://de.wikipedia.org/wiki/Kaltstartattacke) werden das allgemeine Prinzip einer "Kaltstartattacke" und Gegenmaßnahmen beschrieben. Beispielsweise soll das BIOS, also die den Systemstart (Boot) steuernde Systemsoftware, den Arbeitsspeicher beim sogenannten "Power-On-Self-Test" (kurz POST) leeren. Diese Gegenmaßnahme ist allerdings keine zuverlässige Lösung, die im Bereich von SB-Terminals einsetzbar wäre. Denn POST erzielt keine sichere und vollständige Löschung des Arbeitsspeichers; POST ist abschaltbar; POST kann ggf. unterbrochen oder übergangen werden; und POST bringt eine erhebliche Verzögerung aller Neustarts mit sich.

Die US 7 343 496 B1 offenbart einen Hochsicherheits-Controller, der in einem SB-Terminal implementiert sein kann und der eine Manipulations- bzw. Sabotage-Steuerschaltung zur Erkennung von Angreifbarkeits-Zuständen bzw. Bedingungen aufweist, wie z.B. ein Schreibzugriff auf einen Programmspeicher bevor sensible Finanzdaten (z.B. Transaktionsdaten) gelöscht wurden; eine Sabotage-Erkennungs-Bedingung; die Freigabe eines Debuggers; einen Anschalt-Zustand (power up), einen unzulässigen Temperatur-Zustand, einen unzulässigen Versorgungsspannungs-Zustand; eine Oszillator-Fehlerzustand und Zustand, der das der Batterie anzeigt. Wenn der Manipulations-Steuerschaltung erkennt, dass eine Schwachstelle vorliegt, dann wird der Speicher, in dem die sensiblen Finanzdaten gespeichert sein können, gelöscht bevor die Bootloader-Funktion oder die Debugger-Funktion aktiviert werden kann. Beim Einschalten, wenn ein gültiges Image im Programmspeicher festgestellt wird, so wird dann der Bootloader nicht ausgeführt und der sichere Speicher wird nicht gelöscht, sondern das Image wird ausgeführt. Die Manipulations-Steuerschaltung ist eine Hardware-Zustandsmaschine, die sich außerhalb der Kontrolle von Benutzer-geladener Software und außerhalb der Kontrolle des Debuggers befindet.

In der US 2008 / 222 430 A1 werden ein Verfahren und eine Vorrichtung zur Verhinderung der unbeabsichtigten Einbehaltung geheimer Daten offenbart, welche durch bevorrechtigten Zustand/Einbrennen (state/bum) in sicheren elektronischen Modulen verursacht wird. Sequentielles Speichern der Daten und ihrer Inversen bei abwechselnden Taktzyklen, und durch aktives Überschreiben derselben, um sie zu zerstören, bewahrt SRAM-Vorrichtungen davor einen bevorrechtigten Zustand entstehen zu lassen. Durch die Verschlüsselung eine relativ großen Menge von geheimen Daten mit einem Master-Schlüssel, und durch Speichern des Master-Schlüssels in diesem nicht-bevorzugten Zustands-Speicher, erweitert das elektronische Modul dieses Schutzsystem bequem auf eine große Menge von Daten, ohne die Unkosten für Investitionen oder aktivem Löschen eines größeren Speicherbereichs.

Aus der US 2012 / 0 079 593 A1 sind ein System und ein Verfahren zum Verhindern von Cold-Boot-Angriffen offenbart, wobei dort mobile Endgeräte, wie z.B. Mobiltelefone oder Laptops, im Fokus stehen. Zur Abwehr von Cold-Boot-Angriffen wird dort (s. Text [0009] und claim 3) offenbart, die Temperatur der Speicherkomponenten zu überwachen und zu prüfen, ob die Temperatur unterhalb eines Schwellenwertes liegt, um festzustellen, ob ein Angriff stattfindet oder nicht.

Die US 8 331 189 B1 offenbart ein DRAM-Speichermodul, das gegen Cold-Boot-Angriffe gesichert ist. Dazu wird ein Schaltkreis ("tamper detection circuit") beschrieben, der einen Angriff erkennt und dann ein Löschen des DRAM-Speichermoduls mittels eines weiteren Schaltkreises ("scrubbing circuit") veranlasst. Es wird dort nicht beschrieben, welches Kriterium dazu dienen soll, den Angriff festzustellen, sondern lediglich Bezug genommen (s. dort Spalte 1, Zeilen 14 ff.) auf den besagten Artikel "Lest We Remember: Cold Boot Attacks on Encryption Keys" von J. Alex Halderman et al..

Die DE 10 2011 014 665 A1 offenbart ein Verfahren zum Detektieren von Angriffen auf einen portablen Datenträger, insbesondere auf eine Smart-Card oder eine (U)SIM-Mobilfunkkarte, anhand eines zeitbasierten Angriffsfehlerkriteriums.

Aufgabe der vorliegenden Erfindung ist es, ein Verfahren zur Abwehr von Cold-Boot-Angriffen vorzustellen, dass im Bereich von Selbstbedienungs-Terminals eingesetzt werden kann und die eingangs genannten Nachteile des Standes der Technik überwindet. Insbesondere sollen Cold-Boot-Angriffe auf Computer in SB-Terminals effektiv und zuverlässig abgewehrt werden, ohne dass eine merkliche Verzögerung aller Neustarts in Kauf genommen werden muss.

Gelöst wird die Aufgabe durch ein Verfahren mit den Merkmalen des Anspruchs 1.

Demnach wird ein Verfahren zur Abwehr von Cold-Boot-Angriffen auf einen Computer in einem Selbstbedienungs-Terminal vorgeschlagen, das folgende Schritte aufweist, welche mittels des Hauptprozessors und einer für den Systemstart des Computers eingerichteten Systemsoftware, insbesondere BIOS oder (U)EFI, ausgeführt werden:
- Prüfen von Zustandsdaten, die in einem Zustandsspeicher, auf den die Systemsoftware Zugriff hat, gespeichert werden und die zumindest zwei der folgenden Zustandsdaten umfassen:
   - - erste Zustandsdaten, die die Zeitdauer angeben, in der der Computer stromlos seit dem letzten Herunterfahren des Computers war, um zu prüfen, ob die Zeitdauer, in der der Computer stromlos war, kleiner als ein erster Parameter ist, der eine minimale Zeitdauer definiert, die für ein durch Stromlosigkeit bedingtes Löschen der im Hauptspeicher gespeicherten Daten erforderlich ist;
   - - zweite Zustandsdaten, die die Temperatur des Hauptprozessors angeben, um zu prüfen, ob die Temperatur des Hauptprozessors kleiner als ein zweiter Parameter ist, der eine minimale Temperatur definiert, die bei einem normalen Betrieb des Hauptprozessors nicht unterschritten wird ;
   - - dritte Zustandsdaten, die angeben, ob ein Gehäuse, in dem der Computer montiert ist, geöffnet worden ist; und/oder
   - - vierte Zustandsdaten, die angeben, ob für den Systemstart des Computers ein externes Speichermedium verwendet wird, das nicht Bestandteil des Computers ist;
wobei zumindest zwei der Zustandsdaten geprüft werden, um Abweichungen von Parametern festzustellen, die für einen Normalzustand des Computers definiert werden;
- Wenn für zumindest zwei der geprüften Zustandsdaten Abweichungen von den Parametern festgestellt werden, werden zumindest Teilbereiche des flüchtigen Hauptspeichers gelöscht oder überschrieben; andernfalls wird der flüchtige Hauptspeicher nicht gelöscht oder überschrieben;
- Danach wird der Systemstart des Computers mittels der eingerichteten Systemsoftware ausgeführt.

Demnach wird ein Zustandsspeicher bereit gestellt, auf den das BIOS oder (U)EFI), zugreifen kann, um immer mindestens zwei verschiedene Zustands-Kriterien zu prüfen, wie z.B. Zeitdauer und Temperatur. Es können auch mehr als zwei Kriterien in beliebiger Kombination geprüft werden. Dadurch wird die Zuverlässigkeit des Prüfungsergebnisses deutlich erhöht. Sofern anhand der mindestens zwei Kriterien ein Angriff festgestellt wird, wird der Hauptspeicher gelöscht oder überschrieben; anschließend erfolgt ein Neustart (reboot). Wird kein Angriff festgestellt, kann sofort ein Neustart erfolgen. Somit ist das Verfahren sehr effizient und führt zu keiner merklichen Verzögerung aller Neustarts.

Das Verfahren kann insbesondere bei SB-Terminals eingesetzt werden, die Ziel potentieller Cold-Boot-Angriffe sind, wie z.B. Geldautomaten.

Die Merkmale "erste, zweite, dritte und vierte Zustandsdaten" dienen lediglich dazu anzugeben, dass verschiedene Zustandsdaten geprüft werden. Die Bezeichnung "erste, zweite, dritte und vierte" sollen keine Priorisierung oder Rangfolge angeben.

Was die "zweiten Zustandsdaten" anbelangt, so ist anzumerken, dass es sich dabei um die Temperatur des Prozessors handelt, welche sehr einfach ermittelt werden kann, weil heutige Motherboards über entsprechende Temperatursensoren verfügen und eine deutliche Absenkung der Temperatur des Prozessors auch ein Hinweis auf einen Cold-Boot-Angriff sein kann. Der Erfinder geht hierbei von der Erkenntnis aus, dass in vielen Cold-Boot-Angriffen durch das Besprühen des Hauptspeichers mit Kältespray auch die Betriebstemperatur des Prozessors gesenkt wird. Diese Temperaturabsenkung kann von dem bereits vorhandenen Temperatursensor detektiert werden. Daraufhin kann dann der Hauptspeicher gelöscht werden, um somit alle sensitiven Daten vor dem unbefugten Zugriff zu schützen.

Was die "vierten Zustandsdaten" anbelangt, so ist anzumerken, dass es sich dabei um ein Kriterium handelt, welches das verwendete Boot-Medium betrifft. Der Erfinder geht von der weiteren Erkenntnis aus, dass das Booten von einem System-fremden Boot-Medium ein Hinweis auf einen Angriff sein kann. Dies gilt insbesondere für SB-Terminals, deren Computer in der Regel nur von der System-eigenen Festplatte (internen Systemplatte) booten. Um einen Angriff zu detektieren, prüft das BIOS oder (U)EFI beim Neustart immer, von welchem Medium gebootet wird. Wird von der internen Systemplatte gebootet (leicht feststellbar durch den Anschluss, die SNR der Platte u.ä.), so kann ein Speicherlöschen unterbleiben, da die Systemsoftware kein Auslesen des Speicherinhaltes zulässt. Sollte jedoch ein Fremdmedium, wie z.B. ein USB-Stick, eine Firewire-Festplatte, eine ESATA-Platte o.ä., verwendet werden, so kann dies ein Anzeichen für einen Angriff sein. Das kann verifiziert werden durch Prüfen eines weiteren, anderen Kriteriums, wie z.B. der Zeitdauer ("erste Zustandsdaten"). Ist auch dieses Kriterum erfüllt, wird der Hauptspeicher zumindest teilweise gelöscht. Das vollständige Löschen ist aber vorzuziehen, zumal derzeit keine reguläre Anwendung bekannt ist, die den Inhalt des Hauptspeichers nach dem Neustart wieder verwendet. Somit ist dürfte ein vollständiges Löschen des Speichers keine Auswirkungen auf reguläre Anwendungen haben.

Insgesamt wird die BIOS/(U)EFI-Software der in SB-Terminals verwendeten PCs um folgende Funktionalitäten erweitert:
- vollständiges und sicheres Überschreiben des Hauptspeichers und evtl. weiterer Speicherbereiche, wie z.B. Grafikspeicher;
- einen erweiterten Zustandsspeicher, der Informationen permanent speichern kann;
- Prüfung der Notwendigkeit des vollständigen und sicheren Überschreibens anhand von mindestens zwei Entscheidungs- bzw. Zustands-Informationen, wie z.B. Downtime-Zeit ("erste Zustandsdaten"), Temperaturfühler des Prozessors ("zweite Zustandsdaten"), Gehäuse-Sensor (Öffnen des Gehäuses, "dritte Zustandsdaten").

Das BIOS / (U)EFI verfügt über einen internen Zustandsspeicher. Die Systemsoftware auf dem System-PC aktualisiert laufend den Zustandsspeicher, insbesondere bei Aktionen, die wahrend des Herunterfahrens bzw. eines Neustarts ausgeführt werden. Derartige Aktualisierungen können auch direkt mittels Interrupt-Steuerung innerhalb des BIOS / (U)EFI erfolgen, um einen durchgehend aktuellen Zustand sicher zu stellen.

Das BIOS / (U)EFI prüft nach jedem Neustart den internen Zustand anhand von mindestens zwei der genannten Kriterien. Sollte die Prüfung der Zustandsdaten ergeben, dass sich evtl. noch sensitive Informationen im Hauptspeicher befinden, wird der Prozess zum sicheren und vollständigen Löschen durchgeführt. Sollte die Prüfung der Zustandsdaten ergeben, dass sämtliche sensitive Informationen aus dem Hauptspeicher gelöscht wurden, so wird der Prozess des Speicherlöschens übersprungen und der Neustart direkt eingeleitet. Die Entscheidung, ob gelöscht werden muss oder nicht, wird automatisch getroffen und ist von Außen durch Fremde nicht beeinflussbar.

Es wird auch ein Selbstbedienungs-Terminal vorgeschlagen, das einen Computer aufweist und zur Durchführung des Verfahrens beschaffen ist. Der Computer des SB-Terminals weist einen Zustandsspeicher auf, auf den die Systemsoftware (BIOS / (U)EFI) Zugriff hat und in dem zumindest zwei der genannten Zustandsdaten gespeichert sind, wobei die Systemsoftware den Zustandsspeicher zumindest bei jedem Interrupt-gesteuerten Vorgang während des Herunterfahrens und/oder Neustart aktualisiert.

Besonders vorteilhafte Ausgestaltungen der Erfindung ergeben sich aus den Unteransprüchen:
Demnach wird bevorzugt immer geprüft, ob die Zeitdauer, in der der Computer stromlos war, kleiner als ein erster Parameter ist, der eine minimale Zeitdauer definiert, die für ein durch Stromlosigkeit bedingtes Löschen der im Hauptspeicher gespeicherten Daten erforderlich ist. Die Systemsoftware bzw. das BIOS / (U)EFI wird im Betriebszustand die Zustandsdaten laufend updaten, entweder durch explizite Aufrufe einer Update-Funktion oder indirekt durch die Interrupt-Steuerung. Diese Zustandsinformation ermöglicht dem BIOS / (U)EFI nach einem Neustart abzuschätzen, wie lange der PC stromlos war. Sollte diese "Downtime" größer als oder gleich wie ein gewisser Schwellenwert, so wurde der sensitive Inhalt bereits durch den natürlichen Verfall aus dem Hauptspeicher gelöscht. Ein Neustart kann daher direkt erfolgen. Sollte die Downtime jedoch kleiner als der Schwellenwert sein, so wird automatisch der Hauptspeicher vollständig und sicher gelöscht, sofern auch ein weiteres Kriterium, wie z.B. die Temperatur-Absenkung, erfüllt ist.

Somit ist es auch vorteilhaft, wenn geprüft wird, ob die Temperatur des Hauptprozessors kleiner als ein zweiter Parameter ist, der eine minimale Temperatur definiert, die bei einem normalen Betrieb des Hauptprozessors nicht unterschritten wird. Wie bereits oben dargelegt wurde, kann die Temperatur des Hauptprozessors über den bereits vorhandenen Sensor leicht gemessen werden und als Indikator für ein manipuliertes Kühlen des Arbeitsspeichers dienen.

Vorzugsweise wird auch, zumindest optional, geprüft, ob ein dritter Parameter erfüllt wird, der den Zustand des geöffneten Gehäuses anzeigt. Dies kann durch einen Sensor (z.B. Licht-, Magnet-, oder Stromkreis-Sensor) detektiert werden, der anzeigt, wenn das Gehäuse des PCs geöffnet wurde. Dies ist vorteilhaft, weil bei vielen Cold-Boot-Angriffen das Gehäuse geöffnet wird, um den Speicher mittels Kältespray einzufrieren. Da in herkömmlichen PC-Gehäusen häufig schon Sensoren an den Gehäuseklappen oder - deckeln verbaut sind, können diese genutzt werden. Wurde der PC geöffnet, so wird dieses durch den Sensor detektiert und als Zustandsänderung gespeichert. In diesem Fall muss ein Löschen des gesamten Arbeitsspeichers vorgenommen werden, sofern auch ein weiteres Kriterium, wie z.B. die Temperatur-Absenkung des Prozessors, erfüllt ist. Somit kann durch Verwendung von bereits verfügbaren Sensoren, die das Öffnen des Gehäuses bzw. die Temperatur des Prozessors anzeigen, sehr kostengünstig und zuverlässig ein Cold-Boot-Angriff festgestellt und abgewehrt werden.

In bevorzugten Ausführungen der Erfindung können zumindest auch Teilbereiche eines Grafikspeichers des Computers gelöscht oder überschrieben werden, wenn für zumindest zwei der geprüften Zustandsdaten Abweichungen von den Parametern festgestellt werden, d.h. wenn ein Angriff festgestellt wird.

In weiteren bevorzugten Ausführungen der Erfindung können auch mehr als zwei Zustandsdaten überwacht und optional aktiviert werden. Wenn also mindestens drei der Zustandsdaten zur Prüfung erfasst werden, wird bevorzugt in Abhängigkeit von Rechten, die ein Nutzer für das Benutzen des Computers aufweist, dem Nutzer eine Auswahl der mindestens zwei durchzuführenden Prüfungen ermöglicht. Dadurch werden die genannten Kriterien optional mit entsprechenden Rechten abschaltbar gestaltet. Auch kann der berechtigte Nutzer das BIOS / (U)EFI so einstellen, dass die Kriterien in unterschiedlichen Kombinationen geprüft werden können.

Die Erfindung wird nachfolgend im Detail anhand von Ausführungsbeispielen und unter Bezugnahme auf die beiliegenden Zeichnungen beschrieben, die die folgenden schematischen Darstellungen wiedergeben:
- Fig. 1: zeigt ein Ablaufdiagramm für ein Verfahren gemäß einem ersten Ausführungsbeispiel der Erfindung;
- Fig. 2: zeigt ein Ablaufdiagramm für ein Verfahren gemäß einem zweiten Ausführungsbeispiel der Erfindung; und
- Fig. 3: zeigt einen Aufbau eines Selbstbedienungs-Terminals, das das Verfahren durchführt.

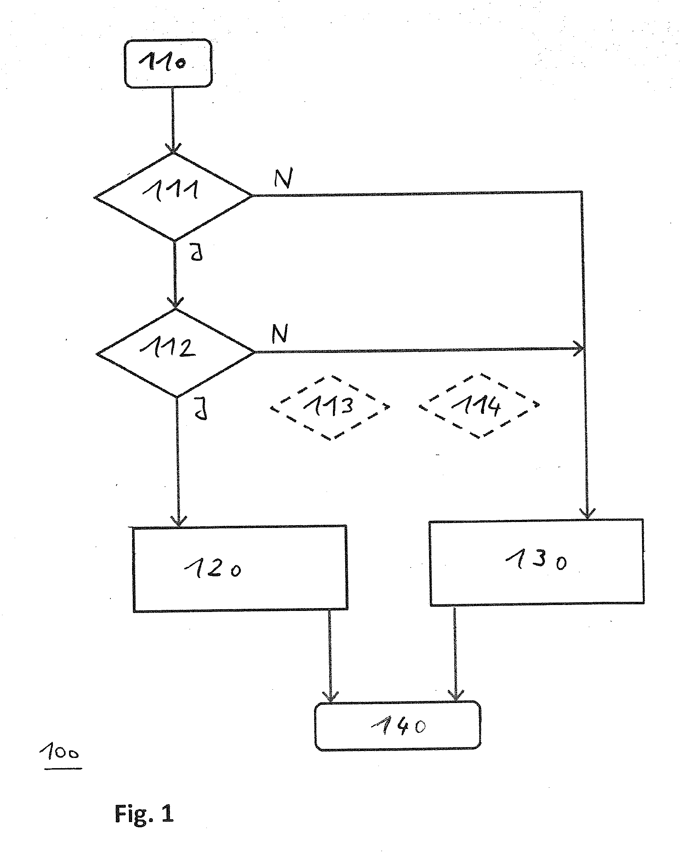

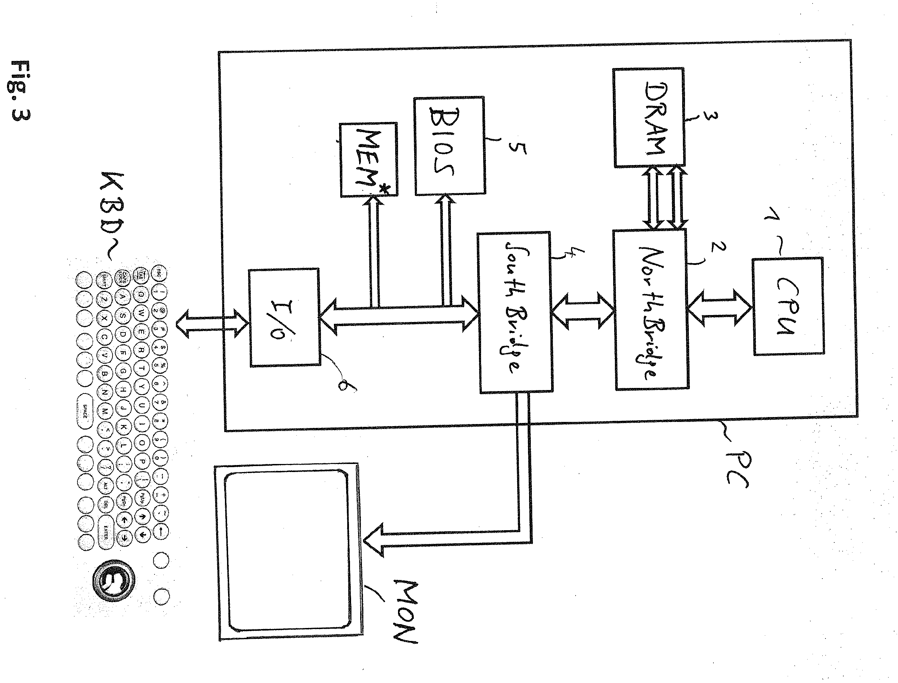

In der Figur 1 ist Ablaufdiagramm für ein Verfahren gemäß einem ersten Ausführungsbeispiel der Erfindung dargestellt. Das Verfahren 100 dient zur Abwehr von Cold-Boot-Angriffen und wird von einem Computer durchgeführt, der in einem Selbstbedienungs-Terminal installiert ist, so wie dies exemplarisch anhand der Fig. 3 gezeigt wird. Daher wird hier auch die Fig. 3 mit in die nachfolgende Beschreibung einbezogen:

Der Computer PC besteht im Wesentlichen aus einem Hauptprozessor 1 (Central Processing Unit - CPU), der über die sogenannte North-Bridge 2 des Chipsatzes auf den Hauptspeicher bzw. Arbeitsspeicher 3 zugreift, welcher aus dynamischen Direktzugriffsspeicher-Chips 3 (Dynamic Random-Access Memory - DRAM) besteht. Über die sogenannte South-Bridge 4 des Chipsatzes kann die Systemsoftware 5 (z.B. BIOS) geladen und ausgeführt werden. Über die South-Bridge 4 ist auch eine Grafikkarte für einen Monitor MON angeschlossen. Des Weiteren besteht über I/O-Schnittstellen 6 eine Verbindung zu externen Geräten, wie z.B. einer Tastatur KBD. Die Tastatur und der Monitor gehören zu den wesentlichen Bedienelementen des SB-Terminals.

Zusätzlich zu einer üblichen PC-Konfiguration enthält der Computer noch einen Zustandsspeicher MEM*, auf den die Systemsoftware 5 direkt Zugriff hat. In diesem Zustandsspeicher sind die nachfolgend noch näher beschriebenen Zustandsdaten gespeichert.

Anhand der Fig. 1 wird nun ein erstes Ausführungsbeispiel für das Verfahren zur Abwehr von Cold-Boot-Angriffen beschrieben:
Das Verfahren wird mittels des Hauptprozessors 1 (s. Fig. 3) und einer für den Systemstart des Computers PC eingerichteten Systemsoftware 5 ausgeführt. Im vorliegenden Beispiel handelt es sich um das UEFI (Unified Extensible Firmware Interface), welches als Nachfolger des EFI (Extensible Firmware Interface) gilt und die Schnittstelle zwischen der Firmware, den einzelnen Komponenten eines Rechners und dem Betriebssystem bildet.
Das UEFI sitzt logisch gesehen unterhalb des Betriebssystems und stellt den Nachfolger des PC-BIOS dar, mit Fokus auf 64-Bit-Systeme. Ein Bestandteil aktueller UEFI-Versionen ist Secure Boot, das das Booten auf vorher signierte Bootloader beschränkt und so Schadsoftware oder andere unerwünschte Programme am Starten hindert. Anstelle von UEFI könnte das Verfahren auch mit Hilfe eines EFI oder BIOS usw. durchgeführt werden. Deshalb wird im Weiteren hier auch allgemein von Systemsoftware gesprochen.

In einem ersten Schritt 110 prüft die Systemsoftware den internen Zustand des Computers anhand der im Zustandsspeicher MEM* (s. Fig. 3) gespeicherten Zustandsdaten. Dazu zählen folgende Daten, welche von der Systemsoftware stets aktualisiert werden:
- erste Zustandsdaten, die die Zeitdauer angeben, in der der Computer stromlos war;
- zweite Zustandsdaten, die die Temperatur des Hauptprozessors angeben;
- dritte Zustandsdaten, die angeben, ob ein Gehäuse, in dem der Computer montiert ist, geöffnet worden ist; und/oder
- vierte Zustandsdaten, die angeben, ob für den Systemstart des Computers ein externes Speichermedium verwendet wird, das nicht Bestandteil des Computers ist;

In einem Schritt 111 wird anhand der ersten Zustandsdaten zunächst geprüft, ob die Zeitdauer t (sog. downtime), in der der Computer stromlos war, geringer als eine vorgegebene Zeitdauer t₀ ist. Dabei handelt es sich um einen Parameter, der eine minimale Zeitdauer t₀ definiert, die für ein durch Stromlosigkeit bedingtes Löschen der im Hauptspeicher 3 gespeicherten Daten erforderlich ist. Ist diese minimale Zeitdauer (seit dem letzen Herunterfahren des Computers) noch nicht erreicht, so befinden sich sensitive Daten im Hauptspeicher, welche über einen Cold-Boot-Angriff erspäht werden könnten. Ist die Zeitdauer t₀ erreicht oder überschritten worden, so wird davon ausgegangen, dass der Hauptspeicher seinen Inhalt durch natürlichen Verfall bereits verloren hat. Daher springt der Ablauf sofort zum Schritt 130, der angibt, dass der Arbeitsspeicher nicht gelöscht oder überschrieben werden muss. Danach kann dann im Schritt 140 sofort ein Neustart (Reboot) veranlasst werden.

Ist jedoch die gemessene Zeitdauer t kleiner als t₀, dann könnte ein Cold-Boot-Angriff erfolgreich sein. Daher wird zur Abwehr eines möglichen Angriffs der nächste Schritt 112 ausgeführt. Dort wird geprüft, ob die Temperatur T des Hauptprozessors 1 (s. Fig. 3) kleiner als ein zweiter Parameter ist, nämlich kleiner als eine vorgebare minimale Temperatur T_{K}, welche als Schwellenwert gilt, der bei einem normalen Betrieb des Hauptprozessors nicht unterschritten wird. Sofern die gemessene Temperatur T gleich oder größer als T_{K} ist, wird angenommen, dass ein normaler Betriebszustand herrscht und kein Cold-Boot-Angriff stattfindet. In diesem Fall springt der Ablauf zum Schritt 130, der angibt, dass der Arbeitsspeicher nicht gelöscht oder überschrieben werden muss. Danach kann dann im Schritt 140 sofort ein Neustart veranlasst werden.

Liegt die gemessene Temperatur T jedoch unterhalb von T_{K} , so wird dies als Anzeichen für einen Cold-Boot-Angriff genommen und der Schritt 120 wird eingeleitet. In diesem Schritt wird der Arbeitsspeicher gelöscht, so dass darin keine sensitiven Daten mehr gespeichert sein können. Es kann auch der Inhalt des Arbeitsspeichers mit Pseudo-Daten überschrieben werden, um dem Angreifer das Vorhandensein von Daten vorzutäuschen. Nach dem Schritt 120 wird dann im Schritt 140 ein Neustart veranlasst.

In der Fig. 1 sind weitere optionale Prüfungsschritte 113 und 114 durch gestrichelte Rauten angedeutet. Diese und ggf. weitere Prüfungsschritte können ebenfalls wahlweise durchgeführt werden. Der Schritt 113 betrifft ein Überprüfen des Zustandes, der anzeigt, ob das Computer-Gehäuse geöffnet wurde oder nicht. Wenn Ja, dann deutet dies auf einen Cold-Boot-Angriff hin. Der Schritt 114 betrifft ein Überprüfen des Zustandes, der anzeigt, ob von einem fremden Speichermedium gebootet wird oder nicht. Wenn Ja, dann deutet dies ebenfalls auf einen Cold-Boot-Angriff hin. Es werden immer zumindest zwei Kriterien anhand der Zustandsdaten geprüft, wodurch die Zuverlässigkeit des Verfahrens deutlich erhöht wird.

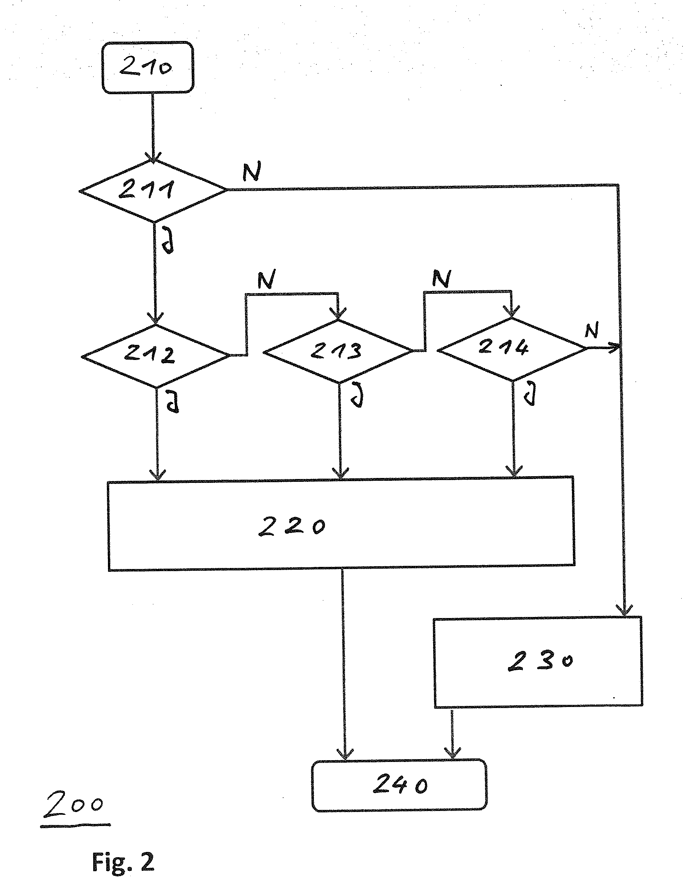

Die Figur 2 zeigt ein zweites Ausführungsbeispiel, das auf dem vorigen Beispiel aufbaut. Das Verfahren 200 enthält demnach die Schritte 211, 212, 220, 230 und 240, die den Schritten 111, 112, 120, 130 bzw. 140 entsprechen und somit hier nicht näher erläutert werden müssen. Die Schritte 213 und 214 entsprechen den bereits zuvor erwähnten optionalen Schritten 113 bzw. 114 (s. Fig. 1), wobei diese Schritte in das Verfahren 200 nach Fig. 2 wie folgt integriert sind:
Wird im Schritt 211 festgestellt, dass die Downtime t kleiner dem Schwellenwert t₀ ist, so besteht grundsätzlich die Gefahr, dass ein Cold-Boot-Angriff erfolgreich sein könnte. Wird dann aber im Schritt 212 festgestellt, dass die Prozessor-Temperatur T nicht kleiner als T_{K} ist, so deutet dies zwar nicht auf einen Cold-Boot-Angriff hin. Dennoch wird anschließend in mindestens einem weiteren Schritt ein anderes Kriterium geprüft, um weitere Indikatoren für einen möglichen Cold-Boot-Angriff zu prüfen. Im vorliegenden Beispiel nach Fig. 2 wird dazu im Schritt 213 geprüft, ob ein Sensor anzeigt, dass das Gehäuse des Computers geöffnet wurde. Ist dies der Fall, dann deutet dies auf einen Cold-Boot-Angriff hin und der Schritt 220 zur Löschung des Arbeitsspeichers kann eingeleitet werden. Ist dies nicht der Fall, dann wird in einem weiteren Schritt 214 geprüft, ob auf ein fremdes Boot-Medium zugegriffen wurde. Ist dies der Fall, dann ist dies ein Indikator für einen Cold-Boot-Angriff und der Schritt 220 zur Löschung des Arbeitsspeichers kann eingeleitet werden. Andernfalls wird der Arbeitsspeicher nicht gelöscht (Schritt 230) und sofort ein Neustart (Schritt 240) durchgeführt.

Wenn zumindest zwei Indikatoren einen Cold-Boot-Angriff anzeigen, wird der Arbeitsspeicher gelöscht. Zusätzlich kann auch vorgesehen werden, dass der Inhalt des Grafikspeichers des Computers gelöscht oder überschrieben wird, um zu verhindern, dass der Angreifer Bildschirmanzeigen rekonstruieren kann.

Mit Hilfe der Erfindung können Cold-Boot-Angriffe sicher und zuverlässig verhindert werden. Insbesondere können Angriffe im Selbstbedienungsumfeld verhindert werden, die üblicherweise wie folgt ablaufen würden:
a) Der System-PC läuft und hält in seinem Hauptspeicher (Arbeitsspeicher) sensible Daten wie z.B. kundenbezogene Daten oder kryptographische Schlüssel.
b) Der Angreifer startet den Rechner neu, indem der kurzzeitig die Stromversorgung unterbricht.
c) Beim Hochfahren des Rechners lässt er seine Spezialsoftware laufen, z.B. durch Boot von einem externen Medium, welches den gesamten Speicherbereich ausliest und auf dem externen Medium sichert bzw. online analysiert und wichtige Daten sichert.
d) Der Angreifer startet den Rechner erneut neu; diesmal fährt das originale Betriebssystem hoch und das SB-Terminal geht wieder in Betrieb. Außer einem Eintrag im Log-File über den Reboot ist keine Spur des Angriffs zurückgeblieben.
e) Der Angreifer analysiert die Daten offline in seinem Labor und kann je nach Ziel des Angriffs weitere Schritte vornehmen.

Durch das erfindungsgemäße Überprüfen mehrere Zustandskriterien, wird die Zuverlässigkeit für das sichere Erkennen von Cold-Boot-Angriffen deutlich verbessert. Die Erfindung kann ohne größeren Aufwand in bestehende Systeme implementiert werden.

## Patentansprüche

1. Verfahren (100; 200) zur Abwehr von Cold-Boot-Angriffen auf einen Computer (PC) in einem Selbstbedienungs-Terminal, mit folgenden Schritten, die mittels des Hauptprozessors (1) und einer für den Systemstart des Computers (PC) eingerichteten Systemsoftware (5) ausgeführt werden:
- Prüfen von Zustandsdaten, die in einem Zustandsspeicher (MEM*), auf den die Systemsoftware (5) Zugriff hat, gespeichert werden und die zumindest zwei der folgenden Zustandsdaten umfassen:
- - erste Zustandsdaten, die die Zeitdauer (t) angeben, in der der Computer (PC) stromlos seit dem letzten Herunterfahren des Computers war, um zu prüfen (111; 211), ob die Zeitdauer (t), in der der Computer (PC) stromlos war, kleiner als ein erster Parameter ist, der eine minimale Zeitdauer (t₀) definiert, die für ein durch Stromlosigkeit bedingtes Löschen der im Hauptspeicher (3) gespeicherten Daten erforderlich ist;
- - zweite Zustandsdaten, die die Temperatur (T) des Hauptprozessors (1) angeben, um zu prüfen (112; 212), ob die Temperatur (T) des Hauptprozessors (1) kleiner als ein zweiter Parameter ist, der eine minimale Temperatur (T_{K}) definiert, die bei einem normalen Betrieb des Hauptprozessors (1) nicht unterschritten wird;
- - dritte Zustandsdaten, die angeben, ob ein Gehäuse, in dem der Computer (PC) montiert ist, geöffnet worden ist; und/oder
- - vierte Zustandsdaten, die angeben, ob für den Systemstart des Computers (PC) ein externes Speichermedium verwendet wird, das nicht Bestandteil des Computers (PC) ist;
wobei zumindest zwei der Zustandsdaten geprüft werden (111; 112), um Abweichungen von Parametern (t₀, Tₖ) festzustellen, die für einen Normalzustand des Computers (PC) definiert werden;
- wenn für zumindest zwei der geprüften Zustandsdaten Abweichungen von den Parametern (t₀, T_{K}) festgestellt werden, werden zumindest Teilbereiche des flüchtigen Hauptspeichers (3) gelöscht oder überschrieben (120); andernfalls wird der flüchtige Hauptspeicher (3) nicht gelöscht oder überschrieben (130);
- danach wird der Systemstart des Computers (PC) mittels der eingerichteten Systemsoftware (5) ausgeführt (140).

2. Verfahren (200) nach Anspruch 1, wobei geprüft wird (213), ob ein dritter Parameter erfüllt wird, der den Zustand des geöffneten Gehäuses anzeigt.

3. Verfahren (100, 200) nach einem der vorhergehenden Ansprüche, wobei, wenn für zumindest zwei der geprüften Zustandsdaten Abweichungen von den Parametern (t₀, T_{K}) festgestellt werden, dann zumindest auch Teilbereiche eines Grafikspeichers des Computers (PC) gelöscht oder überschrieben (120; 220) werden.

4. Verfahren (100, 200) nach einem der vorhergehenden Ansprüche, wobei, wenn mindestens drei der Zustandsdaten zur Prüfung erfasst werden, dann in Abhängigkeit von Rechten, die ein Nutzer für das Benutzen des Computers aufweist, dem Nutzer eine Auswahl der mindestens zwei durchzuführenden Prüfungen ermöglicht wird.

5. Selbstbedienungs-Terminal mit einem Computer (PC) und daran angeschlossenen Bedienmitteln (MON, KBD) zur Bedienung des Selbstbedienungs-Terminals durch einen Benutzer, wobei der Computer einen flüchtigen Hauptspeicher (3) aufweist und zur Abwehr von Cold-Boot-Angriffen eingerichtet ist und mittels des Hauptprozessors (1) und einer für den Systemstart des Computers (PC) eingerichteten Systemsoftware (5) das Verfahren nach einem der vorhergehenden Ansprüche durchführt.

6. Selbstbedienungs-Terminal nach Anspruch 5, wobei der Computer (PC) einen Zustandsspeicher (MEM*) aufweist, auf den die Systemsoftware (5) Zugriff hat und in dem zumindest zwei der folgenden Zustandsdaten gespeichert sind:
- erste Zustandsdaten, die die Zeitdauer (t) angeben, in der der Computer (PC) stromlos seit dem letzten Herunterfahren des Computers war;
- zweite Zustandsdaten, die die Temperatur (T) des Hauptprozessors (1) angeben;
- dritte Zustandsdaten, die angeben, ob ein Gehäuse, in dem der Computer (PC) montiert ist, geöffnet worden ist; und/oder
- vierte Zustandsdaten, die angeben, ob für den Systemstart des Computers (PC) ein externes Speichermedium verwendet wird, das nicht Bestandteil des Computers (PC) ist;
wobei die Systemsoftware (5) den Zustandsspeicher (MEM*) zumindest bei jedem Interrupt-gesteuerten Vorgang während des Herunterfahrens und/oder Neustart aktualisiert.

7. Selbstbedienungs-Terminal nach Anspruch 5 oder 6, wobei das Selbstbedienungs-Terminal oder der Computer (PC) zumindest einen Sensor aufweist, der ein Öffnen des Gehäuses, in dem der Computer (PC) montiert ist, detektiert.

## Claims

1. Method (100; 200) for defending against cold-boot attacks on a computer (PC) in a self-service terminal, including the following steps, which are carried out by means of the main processor (1) and system software (5) configured for the system startup of the computer (PC):
- checking state data which are stored in a state memory (MEM*) to which the system software (5) has access and which include at least two of the following state data items:
- - first state data which indicate the period of time (t) in which the computer (PC) was without power since the last shutdown of the computer, in order to check (111; 211) whether the period of time (t) in which the computer (PC) was without power is less than a first parameter which defines a minimum period of time (t₀) which is required for clearing of the data stored in the main memory (3) due to lack of power;
- - second state data which indicate the temperature (T) of the main processor (1) in order to check (112; 212) whether the temperature (T) of the main processor (1) is less than a second parameter which defines a minimum temperature (T_{K}) which is not undershot during normal operation of the main processor (1);
- - third state data which indicate whether a housing in which the computer (PC) is installed has been opened; and/or
- - fourth state data which indicate whether an external storage medium is used for the system startup of the computer (PC) which is not a component of the computer (PC);
wherein at least two of the state data items are checked (111; 112) in order to determine deviations from parameters (t₀, Tₖ) which are defined for a normal state of the computer (PC);
- if deviations from the parameters (t₀, T_{K}) are determined for at least two of the checked state data items, at least subareas of the volatile main memory (3) are cleared or overwritten (120); otherwise, the volatile main memory (3) is not cleared or overwritten (130);
- then, the system startup of the computer (PC) is carried out (140) by means of the configured system software (5).

2. Method (200) according to Claim 1, wherein it is checked (213) whether a third parameter has been satisfied which indicates the state of the opened housing.

3. Method (100, 200) according to either of the preceding claims, wherein, if deviations from the parameters (t₀, T_{K}) are detected for at least two of the checked state data items, then at least subareas of a graphics memory of the computer (PC) are also cleared or overwritten (120; 220).

4. Method (100, 200) according to one of the preceding claims, wherein, if at least three of the state data items for checking are detected, then a selection of the at least two checks to be carried out is made possible to the user as a function of rights which a user has for using the computer.

5. Self-service terminal including a computer (PC) and operating means (MON, KBD) connected to it for operating the self-service terminal by a user, wherein the computer has a volatile main memory (3) and is configured for defending against cold-boot attacks and carries out the method according to one of the preceding claims by means of the main processor (1) and system software (5) configured for the system startup of the computer (PC).

6. Self-service terminal according to Claim 5, wherein the computer (PC) includes a state memory (MEM*) to which the system software (5) has access and in which at least two of the following state data items are stored:
- first state data which indicate the period of time (t) in which the computer (PC) was without power since the last shutdown of the computer;
- second state data which indicate the temperature (T) of the main processor (1);
- third state data which indicate whether a housing in which the computer (PC) is installed has been opened; and/or
- fourth state data which indicate whether an external storage medium is used for the system startup of the computer (PC) which is not a component of the computer (PC);
wherein the system software (5) updates the state memory (MEM*) at least during each interrupt-controlled process during the shutdown and/or reboot.

7. Self-service terminal according to Claim 5 or 6, wherein the self-service terminal or the computer (PC) includes at least one sensor which detects an opening of the housing in which the computer (PC) is installed.

## Revendications

1. Procédé (100 ; 200) pour la protection contre des attaques de démarrage à froid sur un ordinateur (PC) dans un terminal en libre-service, comprenant les étapes suivantes, qui sont exécutées au moyen du processeur principal (1) et d'un logiciel système (5) configuré pour le démarrage système de l'ordinateur (PC) :
- la vérification de données d'état stockées dans une mémoire d'état (MEM*) à laquelle le logiciel système (5) a accès et qui comprennent au moins deux des données d'état suivantes :
-- des premières données d'état qui indiquent la période de temps (t) pendant laquelle l'ordinateur (PC) n'a pas été alimenté depuis la dernière mise hors tension de l'ordinateur, pour vérifier (111 ; 211) si la période de temps (t) pendant laquelle l'ordinateur (PC) n'a pas été alimenté est inférieure à un premier paramètre définissant une période de temps minimale (t₀) qui est nécessaire pour une suppression par défaut d'alimentation des données stockées dans la mémoire principale (3) ;
-- des deuxièmes données d'état qui indiquent la température (T) du processeur principal (1) pour vérifier (112 ; 212) si la température (T) du processeur principal (1) est inférieure à un deuxième paramètre définissant une température minimale (T_{K}) qui n'est pas atteinte lors d'un fonctionnement normal du processeur principal (1) ;
-- des troisièmes données d'état qui indiquent si un boîtier dans lequel est installé l'ordinateur (PC) a été ouvert ; et/ou
-- des quatrièmes données d'état qui indiquent si un support de stockage externe ne faisant pas partie de l'ordinateur (PC) est utilisé pour le démarrage système de l'ordinateur (PC) ;
dans lequel au moins deux des données d'état sont vérifiées (111 ; 112) pour déterminer des écarts par rapport à des paramètres (t₀, T_{K}) définis pour un état normal de l'ordinateur (PC) ;
- si des écarts par rapport aux paramètres (t₀, T_{K}) sont déterminés pour au moins deux des données d'état vérifiées, au moins certaines zones partielles de la mémoire principale volatile (3) sont supprimées ou écrasées (120) ; sinon la mémoire principale volatile (3) n'est pas effacée ou écrasée (130) ;
- puis le démarrage système de l'ordinateur (PC) est exécuté (140) au moyen du logiciel système (5) configuré.

2. Procédé (200) selon la revendication 1, dans lequel il est vérifié (213) si un troisième paramètre qui indique l'état de boîtier ouvert est satisfait.

3. Procédé (100, 200) selon l'une des revendications précédentes, dans lequel, si des écarts par rapport aux paramètres (t₀, T_{K}) sont détectés pour au moins deux des données d'état vérifiées, alors au moins certaines zones partielles d'une mémoire graphique de l'ordinateur (PC) sont supprimées ou écrasées (120 ; 220).

4. Procédé (100, 200) selon l'une des revendications précédentes, dans lequel, si au moins trois des données d'état sont acquises à des fins de vérification, il est possible à l'utilisateur, selon les droits dont il dispose pour l'utilisation de l'ordinateur, de sélectionner lesdites au moins deux vérifications à effectuer.

5. Terminal en libre-service comportant un ordinateur (PC) et des moyens de commande (MON, KBD) qui lui sont connectés pour la commande du terminal en libre-service par un utilisateur, dans lequel l'ordinateur comporte une mémoire principale volatile (3) et est configuré pour la protection contre des attaques de démarrage à froid, et met en oeuvre le procédé selon l'une des revendications précédentes au moyen du processeur principal (1) et d'un logiciel système (5) configuré pour le démarrage système de l'ordinateur (PC).

6. Terminal en libre-service selon la revendication 5, dans lequel l'ordinateur (PC) comporte une mémoire d'état (MEM*) à laquelle le logiciel système (5) a accès et dans laquelle sont stockées au moins deux des données d'état suivantes :
- des premières données d'état qui indiquent la période de temps (t) pendant laquelle l'ordinateur (PC) n'a pas été alimenté depuis la dernière mise hors tension de l'ordinateur ;
- des deuxièmes données d'état qui indiquent la température (T) du processeur principal (1) ;
- des troisièmes données d'état qui indiquent si un boîtier dans lequel est installé l'ordinateur (PC) a été ouvert ; et/ou
- des quatrièmes données d'état qui indiquent si un support de stockage externe ne faisant pas partie de l'ordinateur (PC) est utilisé pour le démarrage système de l'ordinateur (PC) ;
dans lequel le logiciel système (5) met à jour la mémoire d'état (MEM*) au moins lors de chaque opération commandée par interruption pendant la mise hors tension et/ou le redémarrage.

7. Terminal en libre-service selon la revendication 5 ou 6, dans lequel le terminal en libre-service ou l'ordinateur (PC) comprend au moins un capteur qui détecte une ouverture du boîtier dans lequel est installé l'ordinateur (PC).
